# EUROPEAN PATENT APPLICATION

(11) **EP 3 147 852 A1**
(43) Date of publication of application: **29.03.2017**
(21) Application number: 15773910.3
(22) Date of filing: 26.03.2015
(51) Int. Cl.: G06Q 30/00

(54) **METHOD AND SYSTEM FOR ORDERING GOODS**

(30) Priority: 03.04.2014 RU 2014112981
(71) Applicant: Kunis, Dmitrii Mikhailovich, St. Petersburg 197706 (RU)
(72) Inventor: Kunis, Dmitrii Mikhailovich, St. Petersburg 197706 (RU)
(74) Representative: Algemeen Octrooi- en Merkenbureau B.V.
(86) International application number: PCT/RU2015/000179
(87) International publication number: WO 2015/152767

(57) **Abstract**

Disclosed are a method of ordering goods and a system based thereon. The system for ordering goods comprises at least one supplier server, at least one main server capable of exchanging data with the aforementioned supplier servers, and at least one user device capable of exchanging data with the aforementioned main servers. The system additionally comprises at least one local server capable of receiving supplier product data and of converting the received supplier product data into a unified data format, thus generating unified product data. The main servers are capable of receiving the generated product data and of generating consolidated product data on the basis of the received unified product data. The user devices are capable of receiving the generated consolidated product data and of generating user order data on the basis of the received consolidated product data.

## Description

### FIELD OF THE INVENTION

The present invention relates to systems and methods for ordering goods via the Internet.

### BACKGROUND OF THE INVENTION

Various systems and methods used for remote ordering goods and services are known.

The closest prior art for the present invention is the system for remotely selling goods (RU 114802 U1, G06Q 30/00, 10.04.2012), the system comprising: at least one supplier server comprising a supplier memory device configured for storing supplier product data, at least one main server comprising a main processing device, and at least one user device comprising a user processing device, wherein the at least one main server is capable of communicating with the at least one supplier server to receive supplier product data and is capable of generating unified product data on the basis of the received supplier product data; the at least one user device is capable of communicating with the at least one main server to receive the generated unified product data and is capable of generating user order data on the basis of the received unified product data. In the system of RU 114802, the at least one main server is further capable of communicating with at least one user device to receive the generated user order data, and the main processing device of the at least one main server is further capable of generating main order data on the basis of the received user order data.

The disadvantage of the system for remotely selling goods according to RU 114802 consists in an excessive workload of the main server processing device during simultaneous processing of data being received from user devices and supplier product data being received from supplier memory devices of the supplier servers. This can result in delays in processing user queries and in updating data, which in turn can result in providing old (outdated) data to the users. A userr's attempt to order a product already sold would necessitate a repeat of the order, thus further increasing a workload on the main processing device of the main server.

Therefore, there is a need for further improvement of systems for ordering goods, particularly, in order to reduce a workload on the main processing device of the main server.

Thus, an actual problem consists in developing a system for ordering goods that would overcome the aforementioned disadvantage inherent in the prior art system.

### SUMMARY OF THE INVENTION

It is an objective of the present invention to develop a system for ordering goods which overcomes the aforementioned problem.

The objective is solved by a system for ordering goods, the system comprising at least one supplier server comprising a supplier memory device capable of storing supplier product data, at least one main server comprising a main processing device, and at least one user device comprising a user processing device, wherein the system further comprises at least one local server capable of communicating with at least one of the at least one supplier server to receive the corresponding stored supplier product data and comprising a local processing device capable of converting the received supplier product data to a unified data format and generating unified product data, wherein the at least one main server is capable of communicating with the at least one local server to receive the unified product data, wherein the main processing device is capable of generating consolidated product data based on the received unified product data, wherein the at least one user device is capable of communicating with the at least one main server to receive the consolidated product data, wherein the user processing device is capable of generating user order data based on the received consolidated product data, wherein the at least one main server is further capable of communicating with the at least one user device to receive the user order data, wherein the main processing device is further capable of generating main order data based on the received user order data, wherein the at least one local server is further capable of communicating with the at least one main server to receive main order data, and wherein the local processing device is further capable of generating first control instructions based on the received main order data.

The disclosed system for ordering goods provides a technical effect of expediting data processing when ordering goods and fulfilling the order, particularly by expediting the process of updating data received by the user from the main server, by means of distributing a computing load among the main server and the local servers. In particular, when updating the supplier product data stored in the supplier memory device, the most resource-intensive computations comprising an analysis of supplier product data from at least part of the supplier servers and a convertion of said data to a unified data format are carried out on local servers by means of corresponding local processing devices, thus allowing to reduce load on the main processing device and to utilize, if necessary, the recovered processing resources for processing user device queries and updating unified product data used for generating user order data in real time.

In another embodiment of the present invention, the system for ordering goods further comprises at least one order picker device capable of communicating with at least one local server to receive the generated first control instructions.

In another embodiment of the present invention, at least one order picker device in the system for ordering goods comprises a barcode reader capable of reading barcodes on the products, wherein at least one local server is further capable of communicating with the at least one order picker device to receive the read barcode data and of updating the unified product data based on the received barcode data and generating second control instructions.

In further embodiments of the present invention, the system for ordering goods further comprises at least one courier device capable of communicating with at least one local server to receive the generated second control instructions.

In some embodiments of the present invention, at least one courier device in the system for ordering goods comprises a courier locator capable of generating courier device location data, wherein at least one local server is further capable of communicating with the at least one courier device to receive the generated courier device location data.

In an embodiment of the present invention, at least one local server further comprises an analytical unit capable of analyzing the unified product data and generating a report based on the results of the analysis.

In another embodiment of the present invention, the system for ordering goods further comprises at least one administrator device capable of communicating with at least one local server to receive the generated report and comprising a display device for displaying at least a portion of the received report data.

The objective is further solved by a method of ordering goods, the method comprising the following steps: (a) recording supplier product data into the supplier memory device of at least one supplier server, (d) transmitting the recorded supplier product data to at least one local server comprising a local processing device, (e) converting, by means of the local processing device, the transmitted supplier data to a unified data format and generating unified product data based on the transmitted supplier product data, (f) transmitting the generated unified product data to at least one main server comprising a main processing device, (g) generating consolidated product data by means of the main processing device based on the transmitted unified product data, (h) transmitting the generated consolidated product data to at least one user device comprising a user processing device, (i) generating, by means of the user processing device, user order data based on the transmitted consolidated product data, (j) transmitting the generated user order data to the at least one main server, (k) generating, by means of the main processing device, main order data based on the transmitted user order data, (I) transmitting the generated main order data to the at least one local server, (m) generating, by means of the local processing device, first control instructions based on the transmitted main order data.

According to another embodiment of the present invention, the method of ordering goods further comprises transmitting the generated first control instructions to at least one order picker device.

According to yet another embodiment of the present invention, the method of ordering goods further comprises reading barcodes on the products by means of a barcode reader of at least one order picker device, transmitting the read barcode data to at least one local server, updating unified product data based on the transmitted barcode data, and generating second control instructions by means of the local processing device.

According to some embodiments of the present invention, the method of ordering goods further comprises transmitting the generated second control instructions to at least one courier device.

According to other embodiments of the present invention, the method of ordering goods further comprises generating, by means of a courier locator of at least one courier device, courier device location data and transmitting the generated courier device location data to at least one local server.

In an embodiment of the present invention, the method of ordering further comprises analyzing, by means of an analytical unit of at least one local server, the unified product data and generating a report based on the results of the analysis.

In another embodiment of the present invention, the method of ordering further comprises transmitting the generated report to at least one administrator device and displaying, by means of a display device of the at least one administrator device, at least a portion of the transmitted report.

### BRIEF DESCRIPTION OF THE DRAWINGS

Fig. 1 illustrates an embodiment of the system for ordering goods.
Fig. 2 illustrates one of local servers in accordance with another embodiment of the system for ordering goods.

### DETAILED DESCRIPTION

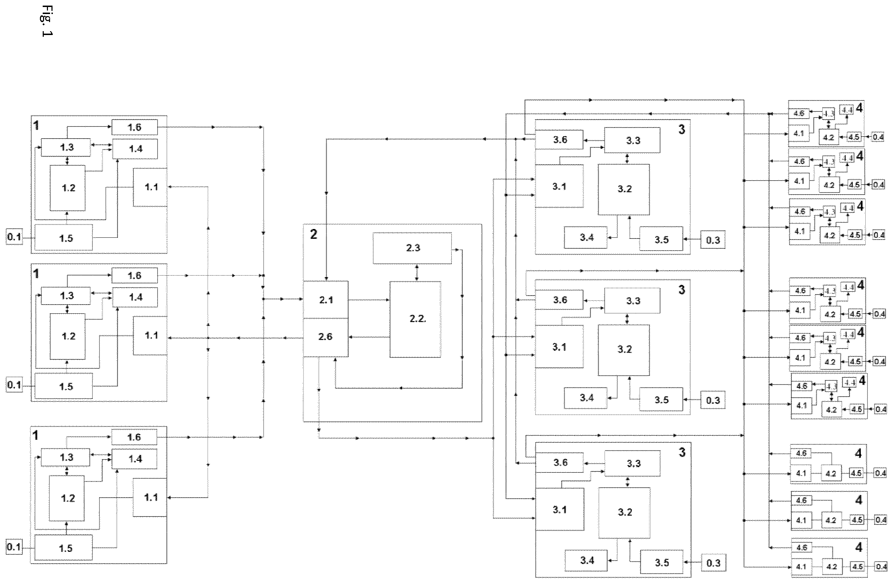

Fig. 1 illustrates an embodiment of the system for ordering goods. The system for ordering goods can be used by a user for remote purchasing goods and/or services offered by various suppliers registered in the system, wherein the system allows the user to compare characteristics and prices of individual goods and/or services offered by one or more suppliers or of a group of goods and/or services offered by one or more suppliers. Further, the present system for ordering goods provides receiving information regarding special offers and loyalty programs offered by various suppliers. Furthermore, the system for ordering goods can be used for tracking the process of picking the order consisting of the goods stored in the supplier's warehouse and receiving data regarding the person responsible for order picking. The system for ordering goods can further be used for tracking movement of the order picking in real time and receiving data regarding the courier and/or the courier vehicle responsible for delivery of the order, etc.

According to the present invention, the system for ordering goods represents an electronic system comprising at least one supplier server (4), each supplier server (4) comprising a supplier receiver (4.1), a supplier memory device (4.2), a supplier processing device (4.3), supplier input means (4.4), a supplier display device (4.5) and a supplier transmitter (4.6); at least one local server (3), each local server (3) being capable of exchanging data with at least one of the at least one supplier server (4) and comprising a local receiver (3.1), a local memory device (3.2), a local processing device (3.3), local input means (3.4), a local display device (3.5) and a local transmitter (3.6); at least one main server (2), each main server (2) being capable of exchanging data with at least one of the at least one local server (3) and comprising a main receiver (2.1), a main memory device (2.2), a main processing device (2.3), main input means (2.4), a main display device (2.5) and a main transmitter (2.6); at least one user device (1), each user device (1) being capable of exchanging data with at least one of the at least one main server (2) and comprising a user receiver (1.1), a user memory device (1.2), a user processing device (1.3), user input means (1.4), a user display device (1.5) and a user transmitter (1.6).

### REGISTERING MAIN SERVERS

It should be noted that in the preferred embodiment of the present invention, the system for ordering goods comprises one main server (2) having a unique main server ID pre-set by an operator (0.2) of the main server (2), wherein all data stored in the main memory device (2.2) of the main server (2) shall correspond, in particular, to said unique main server ID.

In an embodiment of the present invention, the unique main server ID can be embedded into at least one software application during the process of compiling the software application or can be added to the installation package of the software application, wherein the software application can be stored in the main memory device (2.2) of the main server (2) and can be downloaded by the user or the operator of a computer device or mobile device, e.g., via an Internet link. In another embodiment of the present invention, at least one software application can be stored in any other external memory device (not shown) and can be also downloaded therefrom, e.g., via an Internet link.

The process of installing the software application on at least one computer device or mobile device to which the software application had been downloaded using one of the above methods, results in establishing a communication channel with the respective main server (2) in accordance with the main server ID contained in the software application and in registering the at least one computer device and/or mobile device with the main server (2), while assigning thereto a unique ID, e.g., a mobile device ID or a computer device ID, and recording registration data comprising, in particular, the mobile device ID or the computer device ID, to the main memory device (2.2) of the main server (2). Thus, at least one computer device or mobile device registered with the main server (2) would be assigned to the main server (2) or associated therewith, which constitutes the process of registering the at least one computer device or mobile device in the present system for ordering goods.

According to an embodiment of the present invention, the present system for ordering goods can comprise one primary main server having a unique primary main server ID pre-set by an operator of the primary main server, wherein at least one software application can be stored in the primary main memory device of the primary main server and can comprise, in particular, a main software application for registering additional main servers in the present system for ordering goods.

Installing and/or running the main software application on at least one additional main server results in establishing a communication channel with the respective primary main server in accordance with the primary main server ID contained in the main software application for registering the at least one additional main server with the primary main server, while assigning thereto a unique additional main server ID, and recording registration data comprising, in particular, the assigned additional main server ID and the primary main server ID, in the primary main memory device of the primary main server and in the additional main memory device of the additional main server. Thus, the additional main server can be assigned to the primary main server or associated therewith, while providing mutual data exchange upon establishing a wired and/or wireless communication channel. The aforementioned actions constitute an example of the process of registering additional main servers in the present system for ordering goods.

In this embodiment of the present invention, after registering at least one additional main server in the present system for ordering goods, the additional main memory devices of at least part of the registered additional main servers are synchronized with each other and with the primary main memory device of the primary main server in real time. Therefore, a data update in one of the synchronized additional main memory devices results in data updates in the remaining synchronized additional main memory devices and in the primary main memory device. It should be noted that, according to this embodiment of the present invention, at least a first part of computer devices and/or mobile devices can be registered in the present system for ordering goods by registering with the primary main server or with one of the additional main servers, and another part of computer devices and/or memory devices can also be registered in the present system for ordering goods by registering with the primary main server, with the additional main server, or with one of the other registered additional main servers.

In yet another embodiment of the present invention, additional main servers registered in the present system for ordering goods further allow redirecting, in particular, at least a portion of the processing procedures on user orders generated by means of registered computer devices and/or mobile devices, at least a portion of the procedures related to working with the electronic product catalog when creating a user order, and/or at least a portion of the procedures on updating data stored in the primary main memory device and/or in one of the additional main memory devices, to one of the additional main servers in case of a malfunction or a breakdown (including a connection loss) of the corresponding primary main server or the corresponding additional main server to whitch the computer device and/or the mobile device was assigned. It should be noted that upon a recovery or a malfunction removal (in particular, after processing an operation by means of an additional main server due to a connection loss), the databases stored in the primary main memory device and additional main memory devices are updated automatically.

### REGISTERING LOCAL SERVERS

It should be noted that in the present invention, the system for ordering goods operates only with the local servers (3) registered in the system, wherein each registered local server (3) corresponding to a specific goods supplier is assigned an individual local server identificator (ID), and all data stored in the local memory device (3.2) of the registered local server (3) shall correspond, in particular, to the assigned local server ID.

According to the present invention, at least one software application can further comprise a local software application comprising, in particular, a main server ID, for registering local servers (3) in the present system for ordering goods. In another embodiment of the present invention, the local software application can comprise, in particular, a primary main server ID and/or an additional main server ID.

Installing and/or running the local software application downloaded from the main memory device (2.2) of the main server (2) or from some other external memory device (not shown) via an Internet link, on at least one local server (3) results in establishing a communication channel with the respective main server (2) in accordance with the main server ID for registering the at least one local server (3) with the main server (2), while assigning thereto a unique local server ID and recording local server registration data comprising, in particular, the assigned local server ID and the main server ID, in the main memory device (2.2) of the main server (2) and in the local memory device (3.2) of the local server (3). This results in an automatic real-time synchronization of databases stored in the local memory device (3.2) of the local server (3) being registered and in the main memory device (2.2) of the main server (2).

Thus, the local server (3) can be assigned to the main server (2) or associated therewith, while providing mutual data exchange upon establishing a wired and/or wireless communication channel. The aforementioned actions constitute an example of the process of registering local servers in the present system for ordering goods.

In another embodiment of the present invention, installing and/or running the local software application on at least one local server (3) can result in establishing a communication channel with the respective primary main server in accordance with the primary main server ID or with the respective additional main server in accordance with the additional main server ID for registering the at least one local server (3) with the primary main server or with the additional main server, respectively, while assigning thereto a unique local server ID and recording registration data comprising, in particular, the assigned local server ID and the primary main server ID or the additional main server ID in the primary main memory device of the primary main server or in the additional main memory device of the additional main server, respectively, as well as in the respective local memory device (3.2) of the local server (3) being registered. This results in an automatic real-time synchronization of databases stored in the local memory device (3.2) of the local server (3) being registered with the database stored in the primary main memory device of the primary main server or in the additional main memory device of the additional main server, respectively.

Thus, the local server (3) can be assigned to the primary main server or to one of the additional main servers, or associated therewith, while providing a mutual data exchange upon establishing a wired and/or wireless communication channel. The aforementioned actions constitute another example of the process of registering local servers (3) in the present system for ordering goods.

In yet another embodiment of the present invention, after registering a local server (3) in the present system for ordering goods by registering with the primary main server which interacts with the registered additional main servers or by registering with one of the registered additional main servers which interacts with the primary main server, databases stored in the primary main memory device of the primary main server and databases stored in additional main memory devices of the additional main server are automatically updated in real time based on the above registration data of the local server, due to mutual synchronization of additional main memory devices with each other and/or with the primary main memory device.

### REGISTERING SUPPLIER SERVERS

It should be noted that the system for ordering goods according to the present invention operates only with the supplier servers (4) registered in the system.

According to the present invention, at least one software application can further comprise a supplier software application comprising, in particular, a main server ID, for registering supplier servers (4) in the present system for ordering goods. In another embodiment of the present invention, the supplier software application can comprise, in particular, a primary main server ID and/or an additional main server ID.

In an embodiment of the present invention, in order to register a supplier server (4) in the system for ordering goods, the supplier software application must be downloaded, e.g., via an Internet link, from the main memory device (2.2), from an external memory device connected to the supplier server (4) by a wired and/or wireless connection, or from a portable data storage medium, and the downloaded supplier software application must be installed and/or run on the supplier server (4) for a subsequent registration, wherein the operator (0.4) of the supplier server (4) inputs all required initial supplier data, such as supplier contact information, billing data, actual addresses (coordinates) of the warehouses belonging to the particular supplier and storing the goods offered by the particular supplier, the data relating to said goods being represented in the corresponding supplier memory device (4.2), supplier server (4) location coordinates, etc.

Installing and/or running the supplier software application on at least one supplier server (4) results in establishing a communication channel with the respective main server (2) in accordance with the main server ID for registering the at least one supplier server (4) with the main server (2), whiel assigning thereto a unique supplier server ID and recording supplier server registration data comprising, in particular, the input initial supplier data and the assigned supplier server ID and the main server ID, in one of the main memory components for storing supplier data of the main memory device (2.2) corresponding to the assigned supplier ID and the main server ID.

Therefore, the main memory device (2.2) stores in the corresponding main memory components for storing supplier data, each component corresponding to a particular supplier ID and main server ID, a main supplier database comprising initial supplier data for each registered supplier initially associated with a particular supplier ID and main server ID. Wherein each main memory component for storing supplier data, said component corresponding to the supplier ID and the main server ID, stores initial supplier data for a single particular supplier registered in the present system. Furthermore, in the present invention, the primary server (2) assigns the registered supplier server (4) or associates it with a particular local server (3) based, e.g., on location coordinates of the supplier server (4) or based on another previously set criterion.

Therefore, the supplier server (4) can be assigned to a particular local server (3) and a particular main server (2), respectively, or can be associated therewith allowing for data exchange with the local server (3) according to the local server ID when establishing a wired and/or wireless communication channel. The aforementioned actions constitute a process of registering supplier servers (4) in the present system for ordering goods.

As a result of the above assignment of the registered supplier server (4) to a particular local server (3), the corresponding initial supplier data is additionally associated with the local server ID of the server to which the supplier server (4) is assigned. The main supplier data stream comprising initial supplier data, supplier ID, main server ID and local server ID to which the initial supplier data is assigned, can be transmitted by means of the main transmitter (2.6) from the main server (2) to the corresponding local server (3) to which the registered supplier server (4) was assigned, in accordance with the particular local server ID; wherein the initial supplier data from the transmitted main supplier data stream received by means of the local receiver (3.1) can be recorded into one of the local memory components for storing supplier data of the local memory device (3.2) in accordance with supplier ID of the supplier identified in the received main supplier data stream by means of the local processing device (3.3). Therefore, the local memory device (3.2) stores in corresponding local memory components for storing supplier data, wherein each component corresponds to a particular supplier ID and local server ID, a local supplier database comprising initial supplier data for each registered supplier associated with a particular supplier ID and local server ID. In the present invention, each local memory component for storing supplier data, said component corresponding to the supplier ID and local server ID, stores initial supplier data for a single particular supplier registered in the present system.

The local supplier data stream comprising initial supplier data, supplier ID, main server ID and local server ID to which the initial supplier data is assigned can be transmitted by means of the local transmitter (3.6) from the local server (3) to the corresponding supplier server (4) in accordance with the particular supplier ID; the initial supplier data from the transmitted local supplier data stream received by means of the supplier receiver (4.1) can be recorded into one of the supplier memory components for storing supplier data of the supplier memory device (4.2) in accordance with the supplier ID. Therefore, the supplier memory device (4.2) initially stores in supplier memory components for storing supplier data corresponding to the supplier ID, a supplier database comprising initial supplier data for the corresponding supplier of goods, said data being associated with a particular supplier ID, the main server ID and the local server ID.

In another embodiment of the present invention, the operator (0.2) of the main server (2) can manually assign the registered supplier server (4) or associate said server with a particular local server (3). In yet another embodiment of the present invention, the operator (0.2) can change the local server (3) to which one of the supplier servers (4) registered with the main server (2) is assigned, in order to associate initial supplier data stored in the corresponding main memory component for storing supplier data to a new local server ID. Therefore, when the operator (0.2) changes the local server (3) to which the registered supplier server (4) is assigned, the initial supplier data stored in the corresponding main memory component for storing supplier data, said component corresponding to the supplier ID of the supplier server (4), is associated with the initial supplier ID, the initial main server ID and the new local server ID. In this case, an updating main supplier data stream can be generated and transmitted to the corresponding local server (3) in accordance with the new local server ID in order to update the initial supplier data stored in the corresponding local memory component for storing supplier data of the local memory device (3.2). Furthermore, an updating local supplier data stream can be generated and transmitted to the corresponding supplier server (4) in accordance with the supplier ID from the updating main supplier data stream in order to update the initial supplier data stored in the corresponding supplier memory component for storing supplier data of the supplier memory device (4.2).

In yet another embodiment of the present invention, the supplier server (4) can be assigned to a particular local server (3) and also to the primary main server or to one of the additional main servers, or can be associated thereto by performing operations similar to the operations for registering a supplier server (4) with the main server (2) as described above. Therefore, the aforementioned actions constitute another example of the process of registering a supplier server (4) in the present system for ordering goods.

In yet another embodiment of the present invention, after registering a supplier server (4) in the present system for ordering goods by associating with a particular local server (3) and a particular primary main server interacting with the registered additional main servers, or by associating with one of the additional main servers interacting with the primary main server, the databases stored in the primary main memory device of the primary main server and the databases stored in additional main memory devices of the additional main server are automatically updated in real time based on the above registration data of the supplier, due to a mutual synchronization of additional main memory devices with each other and with the primary main memory device.

### REGISTERING USER DEVICES

It should also be noted that the present system for ordering goods according to the present invention operates only with the user devices (1) that are also registered in the system.

According to the present invention, at least one software application can further comprise a user software application comprising, in particular, a main server ID, for registering user devices (1) in the present system for ordering goods. In another embodiment of the present invention, the user software application can comprise, in particular, a primary main server ID and/or an additional main server ID.

In an embodiment of the present invention, in order to register a user device (1) in the system for ordering goods, the user software application must be downloaded, e.g., via an Internet link, from the main memory device (2.2), from an external memory device (not shown) connected to the user device (1) by a wired and/or wireless connection, or from a portable data storage medium capable of communicating with the user device (1). Then, the downloaded user software application must also be installed and/or run on the user device (1) for a subsequent registration, wherein the user (0.1) must input all required initial user data, such as the name of the user, billing information (bank card number, bank account, e-wallet number, etc.), one or more potential the order delivery addresses, etc. Furthermore, during the registration the user (0.1) must also enter a "Username" and a "Password" in order to be able to subsequently log into the present system for ordering goods using the user's personal account allowing access to the previously input initial user data.

Installing and/or running the user software application on at least one user device (1) results in establishing a communication channel with the respective main server (2) in accordance with the main server ID for registering the at least one user device (1) with the main server (2), while assigning thereto a unique user ID and recording user registration data comprising, in particular, the input initial user data and the assigned user ID and the main server ID, in one of the main memory components for storing user data of the main memory device (2.2), said component corresponding to the assigned user ID and the main server ID.

The main memory device (2.2) stores in corresponding main memory components for storing user data, wherein each component corresponds to a particular user ID and the main server ID, a main user database comprising initial user data for each registered user initially associated with a particular user ID and the main server ID. In the present invention, each main memory component for storing user data, said component corresponding to the user ID and the main server ID, stores initial user data for a single particular user registered in the present system.

Therefore, the user device (1) can be assigned to a particular main server (2) or can be associated therewith while allowing for data exchange with the main server (2) according to the main server ID when establishing a wired and/or wireless communication channel. The aforementioned actions constitute process of registering a user device (1) in the present system for ordering goods.

In yet another embodiment of the present invention, the user device (1) can be assigned to the primary main server or to one of the additional main servers or can be associated thereto by performing operations similar to the operations for registering a user device (1) in the main server (2) described above. Therefore, the aforementioned actions constitute another example of the process of registering a user device (1) in the present system for ordering goods.

In yet another embodiment of the present invention, after registering a user device (1) in the present system for ordering goods by associating with a particular primary main server interacting with registered additional main servers, or by associating with one of the additional main servers interacting with the primary main server, databases stored in the primary main memory device of the primary main server and databases stored in additional main memory devices of the additional main server are automatically updated in real time based on the above user registration data, due to mutual synchronization of additional main memory devices with each other and with the primary main memory device.

### SUPPLIER SERVERS: FORMING SUPPLIER PRODUCT DATABASES

In the present invention, the supplier input means (4.4), in particular, allow the operator (0.4) of the supplier server (4) to input supplier product data corresponding to a particular product supplier into one of the supplier product memory components of the supplier memory device (4.2) corresponding to the assigned supplier ID, wherein the input supplier product data is stored in the supplier product memory component of the supplier memory device (4.2) in one of the conventional data formats. Therefore, the supplier memory device (4.2) of the supplier server (4) further stores the supplier product database comprising the input supplier product data related to the corresponding product supplier and associated with the supplier ID assigned to the product supplier in the corresponding product supplier memory components. The supplier product data stored in the supplier product memory component of the supplier memory device (4.2) of at least one supplier server (4) can be stored in a data format identical to the data format used to store the supplier product data stored in the supplier product memory component of the supplier memory device (4.2) of other supplier servers (4), or can be stored in a data format different from the data format used to store the supplier product data stored in the supplier product memory component of the supplier memory device (4.2) of at least one other supplier server (4).

In an embodiment of the present invention, all supplier product data stored in supplier product components of the supplier memory device (4.2) of at least a part of supplier servers (4) is stored in a format different from other such data. Further, according to the present invention, the operator (0.4) of the supplier server (4) can use the corresponding supplier input means (4.4) to update supplier product data stored in the corresponding supplier product memory component of the supplier memory device (4.2).

In the present invention, the supplier processing device (4.3) controls the operation of the supplier receiver (4.1) and the supplier transmitter (4.6), and further controls the procedures of reading data from the supplier memory device (4.2) and/or recording data into the supplier memory device (4.2).

According to the present invention, the supplier processing device (4.3) of each supplier server (4) interacts with a corresponding supplier memory device (4.2) in order to extract initial supplier data from the supplier database stored in the supplier product memory component of the supplier memory device (4.2), while analyzing the extracted initial supplier data and identifying a local server ID associated, in particular, with said initial supplier data, in the initial supplier data being analyzed, and in order to extract supplier product data associated with a particular supplier ID, a main server ID and a local server ID from the supplier product database stored in the supplier product memory component of the supplier memory device (4.2), thus generating a supplier product data stream. In particular, the generated supplier product data stream comprises the extracted supplier product data, supplier ID, an identified local server ID and a main server ID associated with the extracted supplier product data by means of the supplier processing device (4.3).

Further, the supplier processing device (4.3) of each supplier server (4) interacts with the corresponding supplier transmitter (4.6) to provide thereto an output of the above supplier product data stream to be transmitted.

It should be noted that in the system for ordering goods according to the present invention, several supplier servers (4) can be registered, said servers corresponding to different product suppliers, wherein the first portion of supplier servers (4) of the several supplier servers (4) can be associated, e.g., with the first local server (3), and the second portion of supplier servers (4) of the several supplier servers (4) can be associated, e.g., with the second local server (3). Each supplier server (4) or at least one supplier server (4) from the first portion of supplier servers (4) can output its supplier product data streams to the first local server (3), wherein said data streams can be generated simultaneously or at specific time intervals with respect to each other. Furthermore, each supplier server (4) or at least one supplier server (4) from the second portion of supplier servers (4) can output its supplier product data streams to the second local server (3), wherein said data streams can also be generated simultaneously or at specific time intervals with respect to each other.

### LOCAL SERVERS: FORMING LOCAL PRODUCT DATABASES

According to the present invention, the local receiver (3.1) of each local server (3) is capable of a wired and/or a wireless communication with at least one supplier server (4) and can receive, by means of the corresponding local receiver (3.1), at least one supplier product data stream transmitted by the supplier transmitters (4.6) to the corresponding local server (3) in accordance with the corresponding identified local server ID, wherein said transmission is provided upon establishing a communication session between a corresponding supplier server (4) and a local server (3). Therefore, if the local receiver (3.1) of the local server (3) is capable of a wired and/or wireless communication with a plurality of supplier servers (4), then the local receiver (3.1) can respectively receive supplier product data streams from at least one supplier server (4) of the plurality of supplier servers (4) or from all said servers.

In one embodiment of the present invention, each local receiver (3.1) of the local servers (3) is only capable of communication with the supplier servers (4) previously set up for said local receiver (3.1), wherein the local receiver (3.1) is prevented from communication with the remaining supplier servers (4). Thus, in some possible embodiments of the present invention, one local server (3) is initially set up by the operator (0.3) of the local server (3) to exchange data with particular supplier servers (4) only.

In the present invention, the local processing device (3.3) of each local server (3) controls the operation of the local receiver (3.1) and the local transmitter (3.6), and further controls the procedures of reading data from the local memory device (3.2) and/or recording data into the local memory device (3.2).

In the present invention, the local processing device (3.3) of each local server (3) interacts with a corresponding local receiver (3.1) so that to receive therefrom the received supplier product data stream, the data stream comprising supplier product data in one of the conventional data formats, as well as a supplier ID, a local server ID and a main server ID associated with the supplier product data, wherein the local processing device (3.3) analyzes the received supplier product data stream, identifies the supplier ID and the main server ID in the supplier product data stream and compares the format of the received supplier product data with a unified data format previously set and, if said data formats do not match, converts the supplier product data to a unified data format, thus generating unified product data and storing the generated unified product data in one of the local product memory components of the local memory device (3.2) corresponding to the identified supplier ID and the local server ID. Therefore, the local memory device (3.2) stores in corresponding local product memory components, wherein each component corresponds to a particular supplier ID and the local server ID, a local product database comprising unified product data for each registered supplier associated with a particular supplier ID, the local server ID and the main server ID. In the present invention, each local product memory component corresponding to the supplier ID and the local server ID stores unified product data for a single particular supplier registered in the present system.

According to the present invention, the local processing device (3.3) of each local server (3) interacts with the corresponding local memory device (3.2) to extract unified product data from the local product database stored in the local product memory components of the local memory device (3.2), while analyzing the extracted unified product data and identifying a main server ID associated, in particular, with the unified product data, in the unified product data being analyzed, and generating a unified data stream comprising the extracted unified product data, the supplier ID, the local server ID and the identified main server ID associated with the extracted unified product data.

In another embodiment of the present invention, the local processing device (3.3) can generate the above unified data stream without storing the generated unified product data in the corresponding local product memory components of the local memory device (3.2).

In yet another embodiment of the present invention, the procedure of generating the unified data stream by the local processing device (3.3) based on the unified product data generated by the local processing device, and the procedure of storing the generated unified product data in the local product memory components of the local memory device (3.2) can be carried out simultaneously.

Further, in the present invention, each local processing device (3.3) is connected to the corresponding local transmitter (3.6) to provide thereto an output of the above generated unified data stream to be transmitted.

In the preferred embodiment of the present invention, the local product memory components of the local memory device (3.2) of at least a portion of local servers (3) store data in the above unified data format. Thus, each local memory device (3.2) of the local server (3) stores a united local product database in local product memory components, said database being generated by converting supplier product data from the corresponding supplier databases to a unified data format selected in such a manner that it is identical for at least a portion of local servers (3).

In an embodiment of the present invention, the local server (3) can further comprise local input means (3.5) allowing the operator (0.3) of the local server (3) to update unified product data stored in the corresponding local product memory components of the local memory device (3.2), to make queries for in the united local product database for required data, to input additional data regarding promotions, special offers and loyalty programs offered by the suppliers, etc., allowing to store the input additional data in the corresponding local product memory component of the local memory device (3.2) in accordance with the supplier ID of the supplier offering the above promotions. In other embodiments of the present invention, the additional data regarding promotions, special offers, loyalty programs, etc., can be input by the operator (0.2) of the main server (2) in the corresponding main memory component of the main memory device (2.2) in accordance with the supplier ID of the supplier planning the above promotions.

In yet another embodiment of the present invention, the local server (3) can further comprise a local display device (3.4) connected with the corresponding local memory device (3.2) and allowing to display the unified product data stored in one of the local product memory components and/or allowing to display at least one of the initial supplier data stored in one of the local memory components for storing supplier data of the local memory device (3.2).

### MAIN SERVERS: FORMING MAIN PRODUCT DATABASES

In the present invention, each main receiver (2.1) of the main server (2) is capable of a wired and/or wireless communication with at least one local server (3) and can receive the unified data stream transmitted by the corresponding local transmitter (3.6) upon establishing a communication session with a corresponding local server (3), wherein the unified data stream comprises unified product data in a particular unified data format as well as a supplier ID, a local server ID and a main server ID, associated with said unified product data.

In the present invention, the main processing device (2.3) of each main server (2) is connected with a corresponding main receiver (2.1) to receive therefrom the received unified data stream. The main processing device (2.3) analyzes the received unified data stream, identifies a supplier ID in the unified data stream being analyzed and extracts unified product data from the unified data stream being analyzed, the unified product data corresponding to a particular identified supplier ID, and storing the extracted unified product data in the corresponding main product memory component of the main memory device (2.2) in accordance with the identified supplier ID and/or updating the particular main product memory component based on the extracted unified product data. Therefore, the main memory device (2.2) stores the main product database comprising unified product data received from the corresponding local product databases in main product memory components, wherein each main product memory component corresponds to a particular supplier ID and a main server ID. In this case, each main product memory component of the main memory device (2.2) corresponding to a particular supplier ID and main server ID, stores unified product data for one particular supplier registered in the present system, wherein the unified product data is associated with a particular supplier ID, a main server ID and a local server ID.

Further, in the present invention, the main processing device (2.3) is connected with the main memory device (2.2) to provide extraction of the stored unified product data from the main memory device (2.2), and is further connected to the main transmitter (2.6).

In one embodiment of the present invention, the main processing device (2.3) can output the received data stream to the main transmitter (2.6) directly, without storing the unified product data from the received unified data stream in a corresponding main product memory component of the main memory device (2.2).

In another embodiment of the present invention, the main server (2) further comprises a main display device (2.4) connected with the corresponding main memory device (2.2) to display the data contained therein.

In another embodiment of the present invention, the main server (2) further comprises main input means (2.5) allowing the operator (0.2) of the main server (2) to query the corresponding main product database stored in the main memory device (2.2) for required data.

In order to asquire an access to the main product database, the user (0.1) of the user device (1) registered in the system for ordering goods is required to log into the personal user account by entering a "Username" and a "Password" used during the registration. Upon a successful login into the personal account, a wired and/or wireless communication session is established between the user device (1) having a particular user ID and the main server (2) of the system, wherein the main processing device (2.3) of the main server engaged in the communication session with the user device (1) extracts all unified product data stored in at least a portion of the main product memory components of the main memory device (2.2) of the main server (2) and extracts the initial user data stored in the corresponding main memory component for storing user data of the main memory device (2.2) in accordance with the user ID of the user of the particular user device (1), thus allowing to generate consolidated product data based on at least a portion of the extracted unified product data and the extracted initial user data corresponding to the user ID of the user of the particular user device (1), and allowing to output the generated consolidated product data to the main transmitter (2.6) which transmits a consolidated data stream comprising the generated consolidated product data as well as a user ID, a main server ID, a local server ID and a supplier ID associated with the generated consolidated product data to the user device (1) which established connection with the main server (2).

In an embodiment of the present invention, the main processing device (2.3) can generate consolidated product data in real time using, in particular, the unified product data in the unified data stream received by means of the main receiver (2.1) during the communication session established between the corresponding user device (1) and the main server (2).

In yet another embodiment of the present invention, the procedure of generating consolidated product data by the main processing device (2.3) based on, in particular, the unified product data, and the procedure of storing the unified product data in the corresponding main product memory components of the main memory device (2.2) can be carried out simultaneously.

### USER DEVICE: GENERATING AN ORDER

According to the present invention, each registered user device (1) of the system for ordering goods comprises a user receiver (1.1), a user memory device (1.2) a user processing device (1.3), a user display device (1.4), user input means (1.5) and a user transmitter (1.6).

In the present invention, the user device (1) receives, by means of the user receiver (1.1), a consolidated data stream transmitted by the corresponding main transmitter (2.6). The user receiver (1.1) is connected with the user memory device (1.2) for storing at least a portion of data contained in the received consolidated data stream in the user memory device (1.2). According to the present invention, the user display device (1.4) is connected with the user memory device (1.2), while allowing to display the consolidated product data and the initial user data corresponding to the particular user according to the user ID contained in the consolidated data stream on the user display device (1.4). Thus, the user display device (1.4) registered in the system for ordering goods and corresponding to the particular user according to the user ID can display an electronic catalog based on the consolidated product data and the initial user data (e.g., data pertaining to a payment method, a shipping method, a shipping address, etc., entered by the user during a registration in the present system for ordering goods).

In other embodiments of the present invention, the user receiver (1.1) receiving the transmitted consolidated data stream can be connected directly with the user processing device (1.3) for outputting thereto the received consolidated product data practically in real time.

According to the present invention, the user input means (1.5) of the user device (1) interacting with the user display device (1.4) allow the user (0.1) of the user device (1) to select user product data from the displayed consolidated product data and to transmit the selected user product data. Furthermore, the user input means (1.5) of the user device (1) further allow the user (0.1) to select payment and/or shipping method options based on the displayed initial user data.

In the present invention, the user processing device (1.3) controls the operation of the user display device (1.4), the operation of the user receiver (1.1) and that of the user transmitter (1.6), and further controls the procedures of reading data from the user memory device (1.2) and/or recording data into the user memory device (1.2).

According to the present invention, the user processing device (1.3) can interact with the user display device (1.4) to receive therefrom the selected user product data, thus allowing to generate user order data. Furthermore, in the present invention, the user processing device (1.3) interacts with the user transmitter (1.6) to output the user data stream to be transmitted thereto, wherein the user data stream comprises generated user order data as well as a user ID, a supplier ID, a main server ID and a local server ID associated with the user order data.

Therefore, when working with the electronic catalog, the user (0.1) of the user device (1) can form a product cart by selecting particular products from a number of products displayed in the electronic catalog using the user input means (1.5), wherein the formed product cart can be saved by the user (0.1) in the user memory device (1.2) using the user input means (1.5), and wherein the saved product cart can be, e.g., altered by the user (0.1) after a certain time period by, e.g., by changing and/or removing at least a portion of the selected products in the saved product cart, or can be removed from the user memory device (1.2) by means of the user input means (1.5). The electronic catalog displayed on the user display device (1.4) presents the user the information regarding products, such as product price from different suppliers and various product characteristics (weight, volume, composition, warranty and/or expiry date, category, etc.).

Furthermore, the user (0.1) can sort the electronic catalog data using the user input means (1.5) by selecting one of the sorting options available in the electronic catalog, such as sorting by product type, supplier, etc., or by entering a keyword in the search box of the electronic catalog, thus generating a search query and outputting said query to the user processing device (1.3). Upon receiving the generated search query, the user processing device (1.3) extracts consolidated product data from the user memory device (1.2) and processes the extracted consolidated product data in accordance with the received search query, thus generating sorted product data based on the results of said processing, and outputting the generated sorted product data to the user display device (1.4) to be displayed thereon. Therefore, the user (0.1) can view the results of his search query on the user display device (1.4).

When forming the product cart, the user (0.1) can view the overall price of the product cart formed of the selected electronic catalog products on the user display device (1.4) for various suppliers. This function of the present system for ordering goods is available due to the fact that all consolidated product data stored in the user memory device (1.2) is associated with a particular supplier ID and can be implemented similarly to the data sorting function described above.

Furthermore, when forming the product cart, the user (0.1) can search for similar products. Therefore, after the user (0.1) selects specific products from the electronic catalog when forming the product cart, the user processing device (1.3) receives data regarding the selected product from the user display device (1.4). After receiving data regarding the selected product, for which it is required to find similar products, the user processing device (1.3) extracts consolidated product data from the user memory device (1.2) and compares said data with the received data on the selected product using previously set criteria of the analysis for similar products, said criteria including a price, specific product characteristics, a product rating, product sales, promotions pertaining to the product, etc., and/or a combination of said criteria. As a result of performing the above comparative analysis, the user processing device (1.3) generates sorted product data meeting the corresponding similarity criterion and outputs the generated sorted product data to the user display device (1.4) to be displayed thereon. Therefore, when forming the product cart, the user (0.1) can also view additional products, similar to the products added to the product cart, using the user display device (1.4) and, if desired, the user can replace products in the formed product cart with the products similar thereto and offered by different suppliers, using the user input means (1.5).

In an embodiment of the present invention, the user (0.1) can manually set, by means of the user input means (1.5), any criteria for a search for similar products after forming a product cart or when altering and/or viewing the product cart previously saved in the user memory device (1.2), wherein the user processing device processes the consolidated product data of the user memory device (1.2) accordingly, based on the input similar product search criteria.

After the user (0.1) confirms the formed product cart using the user input means (1.5) of the user device (1), the user (0.1) can amend the initial user data input by the user during the registration in the present system for ordering goods, can select one of the shipping addresses which the user (0.1) could initially set during the registration of the user device (1) in the present system for ordering goods when entering the initial user data (the process of registering a user device (1) in the system for ordering goods is described above) or can input a new order shipping address. Further, the user (0.1) can select one of the available order payment methods which the user (0.1) could initially set during the registration of the user device (1) in the present system for ordering goods when entering the initial user data, or can input a new order payment method.

According to the present invention, the user (0.1) of the user device (1) can form the product cart out of products supplied by different suppliers and stored in different supplier warehouses. In this case, such order will be divided into a specific number of suborders corresponding to the number of different suppliers, i.e. each of the suborders that the above order was divided into will comprise products offered by only one supplier. It should be noted that all operations described above can be performed for each of such suborders. Therefore, the user processing device (1.3) can output to the user transmitter (1.6) a specific number of user data streams to be transmitted in accordance with the number of different product suppliers corresponding to the selected products in the formed product cart.

According to another embodiment of the present invention, only the products of specific suppliers meeting at least one previously set criterion stored in the main memory device (2.2) of the main server (2) will be displayed on the user display device (1.4) of the user device (1) during the operation with the electronic catalog.

### SYNCHRONIZING SUPPLIER SERVER, LOCAL SERVER AND MAIN SERVER MEMORY DEVICES

It should be noted that in the present invention, when registering a supplier server (4) corresponding to a new supplier, an automatic synchronization of the supplier memory device (4.2) of the supplier server (4) with the corresponding local memory device (3.2) of the local server (3) assigned to or associated with said registered supplier server (4) is performed in the present system for ordering goods in real time. Further, according to the present invention, after finishing the process of synchronizing the supplier memory device (4.2) with the local memory device (3.2), an automatic synchronization of the local memory device (3.2) with the main memory device (2.2) of the main server (2) is performed in real time. Therefore, after registering a new supplier server (4) in the present system for ordering goods, the supplier product data stored in the supplier product memory component of the supplier memory device (4.2) of the new registered supplier server (4) is recorded in real time in the particular local memory component of the local memory device (3.2) associated with the supplier ID assigned to the new registered supplier server (4) in a particular unified data format or in the initial data format, if the initial data format is identical to the particular unified data format. Then the unified product data is recorded in real time in the particular main memory component of the main memory device (2.2) associated with the supplier ID assigned to the new registered supplier server (4). Then the main processing device (2.3) generates consolidated product data based on the stored unified product data and outputs the generated consolidated product data in real time to the user device (1), by means of which the user (0.1) had logged in the present system for ordering goods using his/her personal account in order to form a product cart.

Therefore, in the event of an update of supplier product data stored in the product memory component of the supplier memory device (4.2) taking place during the communication session for forming a product cart between the user device (1) and the main server (2), due to the above automatic synchronization of supplier memory devices (4.2), local memory devices (3.2) and main memory devices (2.2), the consolidated product data stored in the user memory device (1.2) can be updated in real time based on the updated unified product data updated, in turn, based on the updated supplier product data. The user processing device (1.3) continuously analyzes the state of the user memory device (1.2), and in case of an update of the user memory device (1.2), the user processing device analyzes the updated consolidated product data and updates at least a portion of the data in the above formed product cart in real time if the updated consolidated product data being analyzed imply any modifications to the formed product cart data, while transmitting a corresponding alert to the user display device (1.4). Therefore, due to the above data updates in the formed product cart, a situation is possible that one of the selected products in the product cart is no longer present in the updated product cart and/or a change in some characteristics of one of the selected products could occur and/or the price of one of the selected products could be modified. In such case, the user processing device (1.3) automatically performs a search for similar products described above, outputting similar product data for the missing products to the user display device (1.4), thus allowing the user (0.1) to replace missing product listings and/or product listings with a modified price and/or product listings with modified characteristics in the previously formed product cart with the products similar thereto.

### MAIN SERVER: ORDER PROCESSING

According to the present invention, the main receiver (2.1) of the main server (2) is capable of a wired and/or wireless communication with at least one user device (1) interacting with the main server (2) to receive the user order data stream transmitted by a corresponding user transmitter (1.6) upon establishing a communication session with the main server (2).

In the present invention, the main processing device (2.3) of the main server (2) interacts with the corresponding main transmitter (2.1) to receive therefrom the received user order data stream, the user order data stream comprising user order data, a user ID, a supplier ID, a main server ID and a local server ID associated with the user order data. Furthermore, the received user data stream can further comprise modified initial user data and/or other data input by the user (0.1) when forming the order (in particular, data on an order payment method and/or order shipping method). According to the present invention, the main processing device (2.3) analyzes the received user order data stream to identify user ID in the user order data stream being analyzed in order to determine the user device (1) which transmitted the user order data stream and to identify a local server ID in the user order data stream being analyzed in order to determine the local server (3) of the present system for ordering goods, to which the received user order data stream is to be subsequently transmitted. Furthermore, the main processing device (2.3) generates main order data based on, in particular, the user order data from the received user order data stream, while outputting the generated main order data to the main transmitter (2.6) which transmits the main order data stream to the corresponding local server (3) in accordance with the identified local server ID, wherein the main order data stream comprises the generated main order data, a user ID, a main server ID, a local server ID and a main server ID associated with the generated main order data.

Further, the main processing device (2.3) can extract user order data from the user order data stream being analyzed, while recording said user order data in the corresponding main memory component of the main memory device (2.2) for storing user data in accordance with the identified user ID. Therefore, the main user database stored in the corresponding main memory components for storing user data of the main memory device (2.2), each memory component corresponding to a particular user ID and a local server ID, further comprises user order data (in addition to the initial user data).

If, during the analysis of the received user order data stream, the main processing device (2.3) of the main server (2) determines that the user order data stream being analyzed comprises modified initial user data differing from the initial user data previously stored in the corresponding main memory component of the main memory device (2.2) for storing user data in accordance with the user ID, the main processing device (2.3) updates the main memory component for storing user data based on the modified initial user data.

In an embodiment of the present invention, the main processing device (2.3) can generate main order data based on user data from the analyzed user order data stream previously stored in one of the main memory components for storing user data of the main memory device (2.2), while outputting the generated main user data to the main transmitter (2.6).

In another embodiment of the present invention, the main processing device (2.3) can simultaneously perform an operation of generating main order data based on the user order data from the received user order data stream and an operation of recording the extracted user order data to the corresponding main memory component of the main memory device (2.2) for storing user data in accordance with the identified user ID.

Similarly, the main server (2) can process a plurality of user data streams from different user devices (1) capable of communicating with the main server (2), wherein at least a portion or all of the user data streams can enter the main server (2) in the form of individual data streams or a united data stream.

According to an embodiment of the present invention, the main processing device (2.3) of the main server (2) can extract data regarding the payment method, including an order payment request, from the user order data stream being analyzed, while redirecting the payment request to a payment gateway, wherein the main processing device (2.3) of the main server can prevent the main order data stream from being output to the corresponding local server (3) until the main server (2) interacting with the particular payment system server (not shown) through which the payment is being made receives a payment confirmation from the payment system server.

According to another embodiment of the present invention, the user (0.1) of the user device (1) can gain access to the present system for ordering goods without registering in the system. In this embodiment, the user (0.1) inputs all required initial user data, such as the name of the user, billing information (e.g., a bank card number, a bank account number, an e-wallet number, etc.) and one or more potential the order delivery addresses during the procedure of forming the order using the user device (1). In this case, the main processing device (2.3) of the main server generates a main order data based on, in particular, the user order data from the received user order data stream without storing the user order data in one of the main memory components of the main memory device (2.2) for storing user data and/or without updating one of the main memory components for storing user data based on the user order data.

### LOCAL SERVER: ORDER PROCESSING

In the present invention, the local receiver (3.1) of the local server (3) provides receiving the main order data stream transmitted by a corresponding main transmitter (2.6) upon establishing a communication session with the corresponding local server (3) in accordance with a particular local server ID, wherein the received main order data stream comprises main order data as well as a user ID, a supplier ID, a local server ID and a main server ID associated with the main order data.

In the present invention, the local processing device (3.3) of the local server (3) interacts with the corresponding local receiver (3.1) to receive therefrom the received main order data stream. According to the present invention, the local processing device (3.3) analyzes the received main order data stream to identify user ID in the main order data stream being analyzed in order to determine the user device (1) with which the order was formed and to identify a supplier ID in the main order data stream being analyzed in order to determine the supplier server (4) in the present system for ordering goods, to which the received main order data stream is to be subsequently transmitted. Furthermore, the local processing device (3.3) generates local order data based on the main order data from the received main order data stream and generates first order control instructions based on the same main order data and further based on, e.g. the results of an analysis of characteristics of the selected products in the order, an information on which is contained in the main order data. According to the present invention, the local processing device (3.3) interacts with the local transmitter (3.6) to output the generated local order data and the generated first order control instructions to the local transmitter (3.6) which transmits the local order data stream to a corresponding supplier server (4) in accordance with the identified supplier ID, wherein the local order data stream comprises the generated local order data, the generated first order control instructions, a user ID, a main server ID, a local server ID and a main server ID associated with the generated local order data and the generated first order control instructions.

Further, the local processing device (3.3) can extract the main order data from the main order data stream being analyzed, while recording said main order data in the corresponding local memory component of the local memory device (3.2) for storing user data in accordance with the identified user ID. Further, the local processing device (3.3) can further extract the initial user data, shipping method data, payment method data and other available data from the main order data stream being analyzed, while recording said main order data in the corresponding local memory component of the local memory device (3.2) for storing user data in accordance with the identified user ID. Therefore, the local user database stored in the corresponding local memory components of the local memory device (3.2) for storing user data, each component corresponding to a particular user ID and a local server ID, can comprise main order data and can further comprise shipping method data, payment method data and other data as well as a user ID, a customer ID, a main server ID and a local server ID associated with the main order data, shipping method data, payment method data and other data.

In an embodiment of the present invention, the local processing device (3.3) can generate local order data and first order control instructions based on the main order data in the analyzed main order data stream previously stored in one of the local memory components of the local memory device (3.2) for storing user data, outputting the generated local order data and the first order control instructions to the corresponding local transmitter (3.6).

In another embodiment of the present invention, the local processing device (3.3) can simultaneously perform an operation of generating local order data based on the main order data from the received main order data stream and an operation of recording the extracted main order data to the corresponding local memory component for storing the user data of the local memory device (3.2) in accordance with the identified user ID.

Similarly, the local server (3) can process a plurality of main order data streams from different main servers (2) capable of communicating with said local server (3), wherein at least a portion or all of the main order data streams can enter the local server (3) in the form of individual data streams or a united data stream.

### SUPPLIER SERVER: ORDER PROCESSING

In the present invention, the receiver (4.1) of the supplier server (4) provides receiving the local order data stream transmitted by the corresponding local transmitter (3.6) upon establishing a communication session with the corresponding supplier server (4) in accordance with the particular supplier ID, wherein the local order data stream comprises local order data and first order control instructions as well as a user ID, a supplier ID, a local server ID and a main server ID associated with the local order data and the first order control instructions.

In the present invention, the supplier processing device (4.3) of the supplier server (4) interacts with the corresponding supplier receiver (4.1) to receive therefrom the received local order data stream.

According to the present invention, the supplier processing device processes the received local order data stream to extract the first order control instructions and the local order data from the received local order data stream, while outputting the extracted first order control instructions and the extracted local order data to the supplier display device (4.4) interacting with the supplier processing device (4.3), wherein the supplier display device (4.4) is capable of displaying the received first order control instructions and the local order data for a subsequent order picking by the order picker at the customer's side who can view the information displayed on the supplier display device (4). In order to confirm the received user order, the operator (0.4) of the corresponding supplier server (4) generates a confirmation of the order acceptance corresponding to the particular order by means of the supplier input means (4.5). In the present invention, the generated confirmation of the order acceptance can be transmitted to a particular user which formed the order, in accordance with user ID. Furthermore, a message corresponding to the transmitted confirmation of the order acceptance can be output to the user display device (1.4) in order to notify the user of the order being accepted for processing. Furthermore, the generated confirmation of the order acceptance can be output, by means of the supplier transmitter (4.6), to the corresponding local server (3) assigned to the supplier server (4) in accordance with the local server ID.

Further, the supplier processing device (4.3) can identify a user ID in the local order data stream being analyzed and store the local order data and/or the first order control instructions extracted from the local order data stream being analyzed in the corresponding supplier memory component of the supplier memory device (4.2) for storing user data in accordance with the identified user ID. Further, the supplier processing device (4.3) can further extract initial user data, shipping method data, payment method data and other available data from the local order data stream being analyzed, while recording said main order data in the corresponding supplier memory component of the supplier memory device (4.2) for storing user data in accordance with the identified user ID. Therefore, the supplier user database stored in the corresponding supplier memory components of the supplier memory device (4.2) for storing user data, each component corresponding to a particular user ID and the supplier ID, can store the local order data comprising user order data and can further store the shipping method data, payment method data and other data as well as the user ID, the customer ID, the main server ID and the local server ID associated with the local order data, shipping method data, payment method data and other data.

### ORDER PICKING

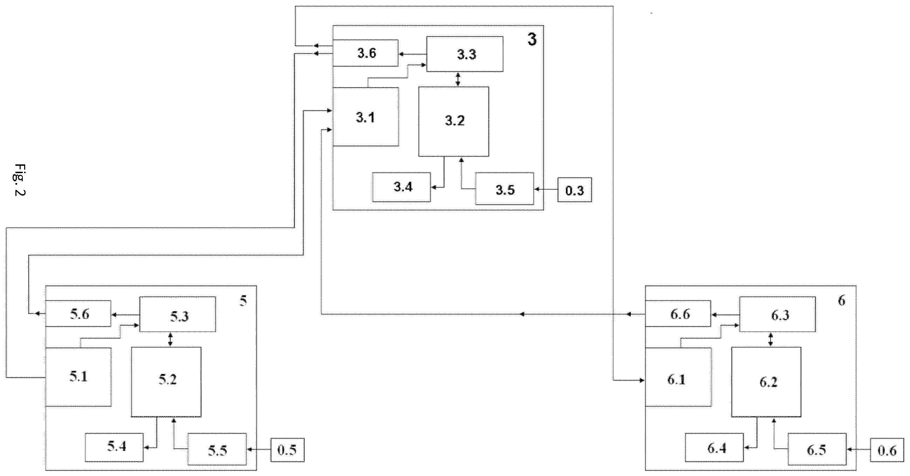

In the present invention, the system for ordering goods can further comprise at least one order picker device (5) (see Fig. 2), each order picker device having a unique order picker identificator (ID) assigned during the registration in the present system and capable of communicating with at least one local server (3) of the present system, to which the order picker device (5) is assigned during the registration in the present system.

According to the present invention, at least one software application can further comprise an order picker software application comprising, in particular, a main server ID and la ocal server ID, for registering order picker devices (5) in the present system for ordering goods, wherein the order picker software application can be stored in the main memory device (2.2), in the local memory device (3.2) or in an external memory device (not shown). In another embodiment of the present invention, the order picker software application can comprise, in particular, a local server ID as well as a primary main server ID and/or an additional main server ID.

In an embodiment of the present invention, in order to register an order picker device (5) in the system for ordering goods, the order picker software application must be downloaded, e.g., via an Internet link, from the main memory device (2.2), from the local memory device (3.2), from an external memory device (not shown) connected to the order picker device (5) using a wired and/or wireless connection, or from a portable data storage medium capable of communicating with the order picker device (5).

Then, the downloaded order picker software application must also be installed and/or run on the order picker device (5) for a subsequent registration.

During the registration, the operator (0.5) of the order picker device (5) must input, by means of the order picker input means (5.5) the initial order picker data, such as an order picker name, order picker contact details, a name of the direct superior, etc., and must also enter a "Username" and a "Password" in order to be able to subsequently log into the present system for ordering goods using the order picker's personal account allowing an access to previously completed order picking requests.

In the preferred embodiment of the present invention, installing and/or running the order picker software application on at least one order picker device (5) results in establishing a communication channel with the respective local server (3) in accordance with the local server ID for registering the at least one order picker device (5) with the local server (3), while assigning thereto a unique order picker ID and recording order picker registration data comprising, in particular, the input initial order picker data and the assigned order picker ID and the local server ID, in one of the local memory components of the local memory device (3.2) for storing order picker data, said component corresponding to the order picker ID and the local server ID.

Therefore, the local memory device (3.2) further stores in the corresponding local memory components for storing the order picker data, wherein each component corresponds to a particular order picker ID and a local server ID, a local order picker database comprising the initial order picker data for each registered order picker initially associated with a particular order picker ID and a local server ID. Each local memory component for storing the order picker data, said component corresponding to the order picker ID and the local server ID, stores the initial order picker data for a single particular order picker registered in the present system for ordering goods.

Therefore, the order picker device (5) can be assigned to a particular local server (3) or can be associated therewith, while allowing for data exchange with the local server (3) according to the local server ID when establishing a wired and/or wireless communication channel. The aforementioned actions constitute a process of registering an order picker device (5) in the present system for ordering goods.

In yet another embodiment of the present invention, the order picker device (5) can be assigned to a particular local server (3), which, in turn, can be assigned to the primary main server or to one of the additional main servers, or can be associated therewith by performing operations similar to the operations performed for registering an order picker device (5) with the local server (3) associated with the main server (2) as described above. Therefore, the aforementioned actions constitute another example of the process of registering an order picker device (5) in the present system for ordering goods.

In yet another embodiment of the present invention, after registering an order picker device (5) in the present system for ordering goods by means of associating with a particular local server (3), which, in turn, is assigned to a primary main server interacting with the registered additional main servers, or by means of associating with one of the additional main servers interacting with the primary main server, the databases stored in the primary main memory device of the primary main server and the databases stored in the additional main memory devices of the additional main server are automatically updated in real time based on the above registration data of the order picker stored in the local memory device (3.2) due to a synchronization of the local memory device (3.2) with the primary main memory device or with one of the additional main memory devices and due to a synchronization of additional main memory devices with each other and/or with the primary main memory device.

In an embodiment of the present invention, the operator (0.3) of the local server (3) can generate a local order picker database in the corresponding local memory components for storing order picker data of the local memory device (3.2) in advance by inputting into said database the above initial order picker data, wherein during the registration procedure, the operator (0.5) of the order picker device (5) inputs at least a portion of his/her personal initial order picker data, which data is output to a corresponding local server (3), while the local processing device (3.3) compares the input initial order picker data with the initial order picker data previously stored on the local memory device (3.5) to identify the order picker device (5) and assign a unique order picker ID to the order picker device (5).

The local order picker data stream comprising the initial order picker data, an order picker ID, a main server ID and a local server ID to which the initial order picker data is assigned, can be transmitted by means of a local transmitter (3.6) from the local server (3) to the corresponding main server (2) in accordance with the particular main server ID; the initial order picker data from the transmitted order picker data stream received by means of the main receiver (2.1) can be recorded into one of the main memory components for storing order picker data of the main memory device (2.2), in accordance with the order picker ID. Therefore, the main memory device (2.2) further stores in the corresponding main memory components for storing order picker data, said components corresponding to the order picker ID and the main server ID, the main order picker database comprising the initial order picker data for each registered order picker associated with a particular order picker ID, a main server ID and a local server ID.

The registered order picker device is capable of communicating with at least one particular local server (3) in accordance with the local server ID for receiving therefrom a generated local data stream, said local data stream comprising local order data and first order control instructions as well as a supplier ID, a main server ID, a user ID and a local server ID associated with the local order data and the first order control instructions.

After receiving, by means of the local receiver (3.1), the generated confirmation of the order acceptance transmitted by the supplier transmitter (4.6) to the particular local server (3) in accordance with the local server ID, the local processing device (3.3) queries the local order picker database stored in the local memory device (3.2) thereof in order to determine idle or free order picker devices (5), while outputting the local data stream to at least one free order picker device for a subsequent order picking.

In an embodiment of the present invention, the local data stream described above can be output to a particular free order picker device (5) based on a previously set criterion of comparing the order pickers, the data regarding said criterion being stored in the local memory device (3.2).

It should also be noted that as soon as the order picker device (5) receives the local data stream by means of the order picker receiver (5.1), the order picker processing device (5.3) of the order picker device (5) automatically generates a confirmation on starting the order picking corresponding to a particular order, while outputting, by means of the order picker transmitter (5.6), the generated confirmation on starting the order picking to a particular local server (3) in accordance with local server ID contained in the received local data stream, to a particular main server (2) in accordance with the main server ID contained in the received local data stream, and to a particular user device (1) in accordance with the user ID contained in the received local data stream, wherein the confirmation on starting the order picking is associated with the particular user ID, the main server ID, the local server ID, the supplier ID and the order picker ID.

The local processing device (3.2) automatically analyzes the received confirmation on starting the order picking and stores the data relating to the confirmation on starting the order picking in the corresponding local memory component of the local memory device (3.2) for storing the order picker data or updates the data of the local memory component for storing the order picker data, based on the data relating to the confirmation on starting the order picking in accordance with order picker ID. The data relating to the confirmation on starting the order picking reflect an active or a busy state of this order picker device (5) at the current moment of time, thus providing an output of another local data stream to an idle or a free order picker device only as a result of the analysis of the local memory components for storing the order picker data, said analysis being performed by means of the local processing device (3.2).

It should be noted that due to a synchronization between the local memory device (3.2) and the main memory device (2.2), as a result of updating the data of the particular local memory component of the local memory device (3.2) for storing order picker data, a particular main memory component of the main memory device (2.2) for storing the order picker data in accordance with order picker ID is updated in real time.

Therefore, the user device (1) can receive, by means of the user receiver (1.1), the data relating to the confirmation on starting the order picking transmitted by the main transmitter (2.6) of the main server (2) in accordance with user ID, and can output the received confirmation on starting the order picking to the user display device (1.4) in order to notify the user (0.1) of the user device (1), which was used to compose the order, of the fact that the order picking process has been started.

Further, the order picker device (5) can comprise a barcode reader (5.7) capable of reading barcodes on the products in accordance with the user order data contained in the received local data stream, while providing a generation, by means of the order picker processing device (5.3) interacting with the barcode reader (5.7), of the read barcode data based on the read barcodes, and outputting the generated read barcode data to the order picker transmitter (5.6).

In an embodiment of the present invention, the order picker device (5) can comprise an order picker memory device (5.2) capable of storing the read barcode data corresponding to user order in a particular order picker memory component for storing order data in accordance with the order picker ID and the user ID, wherein the stored read barcode data is associated with the user ID, the main server ID,the local server ID, the supplier ID and the order picker ID.

In another embodiment of the present invention, the order picker device (5) can further comprise an order picker display device (5.4) capable of displaying the data stored in the order picker memory device (5.2).

The local server (3) to which the order picker device (5) is assigned can be further capable of communicating with the order picker device (5) to receive the order picker data stream comprising the read barcode data as well as the order picker ID, the supplier ID, the user ID, the local server ID and the main server ID associated with the read barcode data, while providing updating of the unified product data stored in the corresponding local product memory component of the local memory device (3.2) based on the received barcodes, and automatically generating second control instructions which can be, e.g., transmitted by means of the local transmitter (3.6) to a courier device interacting with the local server (6), thus providing automatic determination of the location coordinates of the courier device by means of a courier locator which can be installed in the courier device.

It should be noted that, due to the above synchronization of the local memory device (3.2) with the main memory device (2.2) and the supplier memory device (4.2), as a result of updating the unified product data in the corresponding local product memory component of the local memory device (3.2) in real time, the consolidated product data stored in the corresponding main product memory component of the main memory device (2.2), in accordance with the main server ID, and the supplier product data stored in the corresponding supplier product memory component of the supplier memory device (4.2), in accordance with the supplier ID, are updated in real time.

Furthermore, the order picker device (5) can transmit, by means of the order picker transmitter (5.6), an order picker data stream to the user device (1), by means of which the product order was formed, in accordance with the user ID, while providing displaying the read barcode data contained in the order picker data stream on the user display device (1.4), thus allowing the user (0.1) of the user device (1) to track the process of picking his/her order in real time; in particular, the user can track the process of adding product items corresponding to the selected products in his/her order.

After finishing the order picking, the order picker device (5) automatically generates, by means of the order picker processing device (5.3), a confirmation on finishing the order picking corresponding to a particular order, while outputting the generated confirmation on finishing the order picking to the particular local server (3) in accordance with the local server ID, which outputs the received confirmation on finishing the order picking, accordingly, to the particular main server (2) in accordance with the main server ID, which, in turn, outputs the received confirmation on finishing the order picking to the particular user device (1) in accordance with the user ID, wherein said confirmation on finishing the order picking is associated with the the particular user ID, the main server ID, the local server ID, the supplier ID and the order picker ID.

The local processing device (3.2) automatically analyzes the received confirmation on finishing the order picking and stores the data relating to finishing the order picking in the corresponding local memory component of the local memory device (3.2) for storing order picker data in accordance with the order picker ID or updates the local memory component for storing order picker data based on the received confirmation on finishing the order picking. The data relating to finishing the order picking reflects an idle state or a free state of the order picker device (5) at the current moment of time, thus providing a potential output of another local data stream to said idle or free order picker device only as a result of the analysis of the local memory components for storing order picker data, said analysis being performed by means of the local processing device (3.2).

It should be noted that due to a synchronization between the local memory device (3.2) and the main memory device (2.2), as a result of updating the data of a particular local memory component of the local memory device (3.2) for storing order picker data, a particular main memory component of the main memory device (2.2) for storing order picker data is updated in real time in accordance with the order picker ID.

Therefore, the user device (1) can receive, by means of the user receiver (1.1), the data relating to the confirmation on finishing the order picking transmitted by the main transmitter (2.6) of the main server (2) in accordance with the user ID, and can output the received confirmation on finishing the order picking to the user display device (1.4) to notify the user (0.1) of the user device (1), which was used to compose the order, of the fact that the order picking process has been finished.

Further, the main processing device (2.3) can analyze the main memory components of the main memory device (2.2) for storing order picker data in order to obtain order picker workload data expressed as a sum of the data relating to the confirmation on starting the order picking and/or the data relating to the confirmation on finishing the order picking stored in the main memory components for storing order picker data.

The main processing device (2.3) can automatically include the received order picker workload data into the generated consolidated data stream, so that the user processing device (1.3) can output a message regarding a lack of free order pickers for the supplier of the composed user order to the user display device (1.4) as a result of the analysis of the received consolidated data stream comprising, in particular, the order picker workload data. Furthermore, the user (0.1) can view on the user display device (1.4) an estimated waiting time for at least one free order picker of the supplier to pick the user (0.1) order, which provides the user (0.1) with the order picker workload data for said supplier, and thus the user (0.1) can alter the composed order by selecting same or similar product listings (a selection of similar product listings for the order can be performed using a similar product search function described above) ad thus composing the user order while using one of the suppliers having at least one free order picker or using one of the suppliers with a shorter waiting time until at least one order picker is free.

In an embodiment of the present invention, the order picker device (5) further comprises an order picker communication device (not shown) capable of establishing an audio and/or video communication channel via the local server (3) with the user device (1) in accordance with the user ID contained in the received local data stream, thus allowing to confirm at least a portion of the product listings in the order with the user (0.1) of the user device (1).

In another embodiment of the present invention, the order picker communication device (not shown) can be further capable of establishing an audio and/or video communication channel with the operator (0.3) of the local server (3) in accordance with the local server ID, with the operator (0.2) of the main server (2) in accordance with the main server ID and/or with the operator (0.4) of the supplier server (4) in accordance with the supplier ID, wherein the local server ID, the main server ID and the supplier ID can be identified by means of the order picker processing device (5.3) in the received local data stream.

The barcode reader (5.7) of the order picker device (5) can be implemented by a scanner incorporated into the order picker device (5), by a video camera and/or a photo camera, etc. The order picker communication device of the order picker device (5) can be implemented by a microphone incorporated into the order picker device (5).

### ORDER DELIVERY

According to the present invention, the system for ordering goods can further comprise at least one courier device (6) (see Fig. 2), each courier device having a unique courier identificator (ID), assigned during a registration in the present system, and being capable of communicating with at least one local server (3) of the present system, to which the courier device (6) is assigned during a registration in the present system.

According to the present invention, at least one software application can further comprise a courier software application comprising, in particular, a local server ID and a main server ID, for registering courier devices (6) in the present system for ordering goods, wherein the courier software application can be stored in the main memory device (2.2), in the local memory device (3.2) or in an external memory device (not shown). In another embodiment of the present invention, the order picker software application can comprise, in particular, the local server ID as well as the primary main server ID and/or the additional main server ID.

In an embodiment of the present invention, in order to register a courier device (6) in the system for ordering goods, the courier software application must be downloaded, e.g., via an Internet link, from the main memory device (2.2), from the local memory device (3.2), from an external memory device (not shown) connected to the courier device (6) using a wired and/or wireless connection, or from a portable data storage medium capable of communicating with the courier device (6).

Then the downloaded courier software application must also be installed and/or run on the courier device (6) for a subsequent registration.

During the registration, an operator (0.6) of the courier device (6) must input, by means of courier input means (6.5) initial courier data, such as a courier name, courier contact details, courier vehicle details, etc., and must also enter a "Username" and a "Password" in order to be able to subsequently log into the present system for ordering goods using the courier's personal account allowing access to the previously delivered orders.

In a preferred embodiment of the present invention, installing and/or running the courier software application on at least one courier device (6) results in establishing a communication channel with the respective local server (3) in accordance with the local server ID for registering the at least one courier device (6) with the local server (3), while assigning thereto a unique courier ID and recording the courier registration data comprising, in particular, the input initial courier data as well as the assigned courier ID and the local server ID, in one of the local memory components of the local memory device (3.2) for storing courier data corresponding to the courier ID and the local server ID.

Therefore, the local memory device (3.2) further stores in the corresponding local memory components for storing courier data, each component corresponding to a particular courier ID and a local server ID, a local courier database comprising initial courier data for each registered courier initially associated with a particular courier ID and a local server ID. Each local memory component for storing courier data, said component corresponding to the courier ID and the local server ID, stores initial courier data for a single particular courier only registered in the present system for ordering goods.

Therefore, the courier device (6) can be assigned to a particular local server (3) or can be associated therewith, thus allowing for a data exchange with the local server (3) according to the local server ID when establishing a wired and/or wireless communication channel. The aforementioned actions constitute a process of registering a courier device (6) in the present system for ordering goods.

In yet another embodiment of the present invention, the courier device (6) can be assigned to a particular local server (3), which, in turn, can be assigned to the primary main server or to one of the additional main servers or can be associated thereto by performing operations similar to the operations for registering a courier device (6) with the local server (3) associated with the main server (2) as described above. Therefore, the aforementioned actions constitute another example of the process of registering a courier device (6) in the present system for ordering goods.

In yet another embodiment of the present invention, after registering a courier device (6) in the present system for ordering goods by associating with a particular local server (3), which, in turn, is assigned to the primary main server interacting with epy registered additional main servers, or by associating with one of the additional main servers interacting with the primary main server, the databases stored in the primary main memory device of the primary main server and the databases stored in the additional main memory devices of the additional main server are automatically updated in real time based on the above registration data of the courier stored in the local memory device (3.2) due to a synchronization of the local memory device (3.2) with the primary main memory device or with one of the additional main memory devices and due to a synchronization of additional main memory devices with each other and/or with the primary main memory device.

The local courier data stream comprising initial courier data, a courier ID, a main server ID and a local server ID to which the initial courier data is assigned can be transmitted by means of the local transmitter (3.6) from the local server (3) to the corresponding main server (2), to which the local server (3) is assigned, in accordance with the particular main server ID; wherein the initial courier data from the transmitted courier data stream received by means of the main receiver (2.1) can be recorded into one of the main memory components of the main memory device (2.2) for storing courier data in accordance with the courier ID. Therefore, the main memory device (2.2) further stores in the corresponding main memory components for storing courier data, said components corresponding to the courier ID and the main server ID, a main courier database comprising initial courier data for each registered courier associated with the particular courier ID, the main server ID and the local server ID.

According to an embodiment of the present invention, each registered courier device (6) comprises a courier locator (not shown) capable of generating location data (coordinates) for the courier device and capable of communicating with the corresponding local server (3) to which the courier device (6) is assigned. The courier locator (not shown) of the courier device (6) can be implemented by a GPS, NAVSTAR or a GLONASS transceiver.

After receiving, by means of the local receiver (3.1), the data relating to the confirmation on finishing the order picking transmitted by the supplier transmitter (4.6) to the particular local server (3) in accordance with the local server ID, the local processing device (3.3) of the local server (3) automatically queries the local courier database stored in local memory components of the local memory device (3.2) for storing courier data in order to determine idle or free courier devices (6) assigned to the local server (3). Then the local server (3) can automatically establish communications with all determined idle or free courier devices (6) in accordance with the corresponding courier ID to receive from each of said courier devices location data corresponding to the current location (coordinates) of the corresponding courier devices (6).

The local processing device (3.3) automatically analyzes the received location data corresponding to the idle or free courier devices (6), corresponding to particular couriers or courier vehicles, and further analyzes the initial supplier data extracted by the local processing device (3.3) from the particular local memory component of the local memory device (3.2) for storing supplier data in accordance with the supplier ID and the initial user data extracted by the local processing device (3.3) from the particular local memory component of the local memory device (3.2) for storing user data in accordance with the user ID, in order to determine (from available options) an estimated delivery time of the picked order from the supplier warehouse, where the picked order is located, to the shipping address specified by the user for each of said courier devices, while providing a determination of an optimal available courier with said courier device (6) or an optimal available courier vehicle with said courier device (6) installed therein, that can perform the delivery of the picked order within the least time interval. The data relating to the least delivery time corresponding to the picked user order can be output to the user device (1), that was used for composing the order, in accordance with the user ID, while providing indication of the received data relating to the least delivery time on the user display device, so that the user (0.1) of the user device (1) can view the estimated delivery time for his/her order on the user display device (1.4).

Therefore, the local server (3) can automatically generate, by means of the local processing device (3.3), second control instructions corresponding to the picked order based on the results of determining an optimal courier or a courier vehicle, while outputting the generated second control instructions to the courier device (6) coupled with the particular optimal courier or the particular optimal courier vehicle in accordance with the courier ID, wherein the second control instructions are associated with the user ID, the supplier ID, the local server ID, the main server ID, the order picker ID and the courier ID.

In an embodiment of the present invention, the second control instructions described above can be generated based on the results of the analysis of the free courier devices (6) whether said courier devices meet the criteria previously set by the operator (0.3) in the local memory device (3.2), while providing output of the generated second control instructions to at least one of the free courier devices (6) meeting the criteria of the analysis.

After receiving, by means of the courier receiver (6.1), the second control instructions corresponding to a picked user order, the courier device (6) automatically generates, by means of the courier processing device (6.3), a confirmation on starting the order delivery, while outputting, by means of the courier transmitter (6.6) the generated confirmation on starting the order delivery to a particular local server (3) in accordance with the local server ID, which outputs the received confirmation on starting the order delivery, accordingly, to a particular main server (2) in accordance with the main server ID, which, in turn, outputs the received confirmation on starting the order delivery to a particular user device (1) in accordance with the user ID, wherein the confirmation on starting the order delivery is associated with the particular user ID, the main server ID, the local server ID, the supplier ID, the order picker ID and the courier ID.

The local processing device (3.2) analyzes the received confirmation on starting the order delivery and stores data regarding the confirmation on starting the order delivery in the corresponding local memory component of the local memory device (3.2) for storing courier data or updates the local memory component for storing courier data based on the received confirmation on starting the order delivery in accordance with the courier ID, which reflects an active state or a busy state of the courier device (6) at the current moment of time, thus providing an output of other second control instructions to an idle or a free courier device (6) only as a result of the analysis of the local memory components for storing courier data, said analysys being carried out by means of the local processing device (3.3).

It should be noted that due to a synchronization between the local memory device (3.2) and the main memory device (2.2), as a result of updating the data of a particular local memory component of the local memory device (3.2) for storing courier data, a particular main memory component for storing courier data of the main memory device (2.2) is updated in real time in accordance with the courier ID.

Therefore, the user device (1) can receive, by means of the user receiver (1.1), the data relating to the confirmation on starting the order delivery transmitted by the main transmitter (2.6) of the main server (2) in accordance with the user ID, and can output the received confirmation on starting the order delivery to the user display device (1.4) to notify the user (0.1) of the user device (1), which was used to compose the order, of the fact that the order delivery process has been started.

After receiving the data relating to the confirmation on starting the order delivery, the user (0.1) of the user device (1) can generate, by means of the user input means (1.5), a user query for an order tracking and can send, by means of the user transmitter (1.6), the generated user query for the order tracking to the main server (2) in accordance with main server ID, which, in turn, redirects the received user query for the order tracking to the corresponding local server (3) in accordance with the local server ID, wherein the user query for the order tracking corresponds to the picked order and is associated with the user ID, the main server ID, the local server ID, the courier ID as well as the order picker ID and the supplier ID. The local processing device (3.3) of the local server (3) processes the received data regarding the user query for the order tracking, while establishing a continuous communication channel with the particular courier device (6) in accordance with the courier ID. After establishing the communication channel, the local server (3) receives location data from the corresponding courier device in real time, while outputting the location data to the corresponding user device used to generate the user query for the order tracking, in accordance with the user ID, wherein the location data output is carried out via a corresponding main server (2) in accordance with the main server ID. Therefore, the user (0.1) of the user device (1) can track the movement of his/her order in real time.

After completing the delivery of the picked order to the shipping address specified by the user (0.1) of the user device (1) used to composed the order, the courier device (6) automatically generates, by means of the courier processing device (5.3), a confirmation on finishing the order delivery corresponding to the particular order, while outputting the generated confirmation on finishing the order delivery to the particular local server (3) in accordance with the local server ID, which outputs the received confirmation on finishing the order delivery to a corresponding main server (2) in accordance with the main server ID, which, in turn, outputs the received confirmation on finishing the order delivery to the user device (1) used to compose the order, in accordance with the user ID, wherein the confirmation on finishing the order delivery is associated with the particular user ID, the main server ID, the local server ID, the supplier ID, the order picker ID and the courier ID.

In an embodiment of the present invention, the courier device (6) can comprise a courier memory device (6.2) capable of storing the data relating to the orders being delivered and corresponding to the picked user orders, in a particular courier memory component for storing order data in accordance with the courier ID and the user ID, wherein the stored data relating to the orders being delivered is associated with the user ID, the main server ID, the local server ID, the supplier ID, the order picker ID and the courier ID.

In another embodiment of the present invention, the courier device (6) can further comprise a courier display device (6.4) capable of displaying data stored in the courier memory device (6.2).

The local processing device (3.2) automatically analyzes the received confirmation on finishing the order delivery and stores the data relating to finishing the order delivery in the corresponding local memory component of the local memory device (3.2) for storing courier data in accordance with the courier ID or updates the local memory component for storing courier data based on the received confirmation on finishing the order delivery. The received confirmation on finishing the order delivery reflects an idle state or a free state of a corresponding courier device (6) at the current moment of time, thus allowing to involve the idle or free courier device (6) into another process of determining estimated delivery time of a picked order (as described above), said process being aimed at determining an optimal courier or an optimal courier vehicle.

It should be noted that due to a synchronization between the local memory device (3.2) and the main memory device (2.2), as a result of updating the data of a particular local memory component of the local memory device (3.2) for storing courier data, a particular main memory component of the main memory device (2.2) for storing courier data is updated in real time in accordance with the courier ID.

The user device (1) can receive, by means of the user receiver (1.1), the data relating to the confirmation on finishing the order delivery transmitted by the main transmitter (2.6) of the main server (2) in accordance with the user ID, and can output the received confirmation on finishing the order delivery to the user display device (1.4) to notify the user (0.1) of the user device (1) which was used to compose the order of the fact that the order delivery process has been finished. Thus, the user (0.1) of the user device (1) can track the process of his/her order delivery in real time from the moment of starting the order delivery, corresponding to a receipt of confirmation on starting the order delivery, to the moment of finishing the order delivery, corresponding to a receipt of confirmation on finishing the order delivery, wherein the fact of finishing the delivery of the picked user order corresponds to a location of the courier or the courier vehicle with the courier device at the shipping address specified by the user (0.1) of the user device (1) used to compose the order.

After receiving the confirmation on finishing the order delivery corresponding to a particular user order, the user (0.1) of the user device (1) used to compose the order can input, by means of the user input means (1.5), a user review regarding, e.g., quality of the courier work, the order delivery speed and/or quality of the products forming his/her order and can output the input user review to a particular main server (2) in accordance with the main server ID, which, in turn, outputs the received user review to a particular local server in accordance with the local server ID, wherein the user review is associated with the user ID, the main server ID, the local server ID, the supplier ID, the order picker ID and the courier ID. The local processing device (3.3) can analyze the text of the received user review using keywords such as "courier", "supplier" and/or "order picker" and similar keywords, recording the user review in at least one of the corresponding memory component for storing courier data, local memory component for storing supplier data and local memory component for storing order picker data of the local memory device (3.2) of the local server (3) in accordance with the courier ID, the supplier ID and the order picker ID.

Further, the main processing device (2.3) can analyze the main memory components for storing courier data of the main memory device (2.2) to obtain courier workload data expressed as a sum of the data relating to the confirmation on starting the order delivery and/or the data relating to the confirmation on finishing the order delivery stored in the main memory components for storing courier data.

The main processing device (2.3) can automatically include the received courier workload data into the generated consolidated data stream, so that the user processing device (1.3) can output to the user display device (1.4) a message on a lack of free couriers for the supplier of the composed user order as a result of the analysis of the received consolidated data stream comprising, in particular, the courier workload data. Furthermore, the user (0.1) can view the estimated waiting time for at least one free courier of the supplier on the user display device (1.4), which provides the user (0.1) with the courier workload data for said supplier, and thus the user (0.1) can alter the composed order by selecting the same or similar product items (the selection of similar product listings for the order can be performed using the similar product search function described above) forming the user order from one of the suppliers having at least one free courier or from one of the suppliers with a shorter waiting time until at least one courier is free.

In an embodiment of the present invention, the courier device (6) further comprises a courier communication device (not shown) capable of establishing an audio and/or video communication channel via the local server (3) with the user device (1) in accordance with the user ID, thus allowing to clarify the order delivery conditions with the user (0.1) of the user device (1) used to compose the order.

In another embodiment of the present invention, the courier communication device (not shown) can be further capable of establishing an audio and/or video communication channel with the operator (0.3) of the local server (3) in accordance with the local server ID, with the operator (0.2) of the main server (2) in accordance with the main server ID and/or with the operator (0.4) of the supplier server (4) in accordance with the supplier ID.

### ANALYTICAL REPORTS

According to the present invention, at least the local server (3) of the present system for ordering goods can further comprise an analytical unit (not shown) interacting with the local memory device (3.2). In the present invention, the analytical unit (not shown) of the local server (3) is capable of analyzing the unified product data stored in the local product memory components of the local memory device (3.2) of the local server (3), and generating a report based on the results of said analysis.

In another embodiment of the present invention, the analytical unit (not shown) of the local server (3) can be further capable of analyzing the initial user data stored in the local memory component for storing user data, the initial supplier data stored in the local memory component for storing supplier data, the initial order picker data stored in the local memory component for storing order picker data and/or the initial courier data stored in the local memory component for storing courier data of the local memory device (3.2), and generating at least one analytical report.

The analytical unit of the local server can be implemented by another processing device in addition to the local processing device (3.3) of the local server (3).

According to the present invention, the system for ordering goods can further comprise at least one administrator device capable of communicating with at least one local server in accordance with the local server ID to receive therefrom a generated analytical report, wherein the administrator device can comprise an administrator display device (not shown) for displaying at least a portion of the data from the received analytical report.

In an embodiment of the present invention, the analytical report can be generated by the analytical unit (not shown) of the local server (3) in response to a request generated by the administrator device.

### USING THE SYSTEM FOR ORDERING GOODS

The procedure of using the disclosed system for ordering goods comprises registering main servers (2), registering local servers (3), wherein each local server is associated with at least one of the registered main servers (2), registering supplier servers (4), wherein each supplier server corresponds to a particular supplier and is associated with at least one of the registered local servers (3), and registering user devices (1), wherein each user device corresponds to a particular user and is associated with at least one of the registered main servers (2), providing synchronization of the supplier memory device (4.2), the local memory device (3.2) and the main memory device (2.2) for mutual data exchange in real time.

In order to receive access to the present system for ordering goods, the user of the registered user device (1) must log into the system using his/her personal account, which requires the user to input his/her "Username" and "Password", which automatically establishes a communication channel with the corresponding main server and displays an electronic catalog of products being offered by all registered suppliers on the user display device (1.4).

The user composes, by means of the user input means (1.5), a user order by selecting at least one product item in the displayed electronic products catalog, outputting the data relating to the composed user order to the corresponding main server (2), which, in turn, outputs the composed user order to the corresponding local server (3) for generating fist control instructions based on the received user order.

Further, order picker devices (5), wherein each order picker device is associated with at least one of the registered local servers (3), and courier devices, wherein each courier device is also associated with at least one of the registered local servers (3), can be additionally registered in the present system.

In this case, the local server (3) outputs the first control instructions to the corresponding order picker device (5) for subsequent picking the user order and outputting a confirmation on finishing the order picking to the corresponding local server (3). This results in data updates in the local memory device (3.2) as well as in the main memory device (2.2) and in the supplier memory device (4.2) due to a synchronization among said devices.

Upon receiving confirmation on finishing the order picking, the local server (3) generates second control instructions and outputs the second control instructions to the corresponding courier device (6) for a subsequent delivery of the picked user order to the shipping address specified by the user.

### EXAMPLES OF IMPLEMENTING SYSTEM COMPONENTS

In the present invention, the user device (1), the local server (3), the main server (2), the supplier server (4), the order picker device (5), the courier device (6) and/or the administrator device (not shown) can be implemented by a laptop, a tablet, a PDA, a communicator, a tablet computer, a cellphone, a communicator, a smartphone or by another commercially available computing device.

In the present invention, the user receiver (1.1), the main receiver (2.1), the local receiver (3.1), the supplier receiver (4.1), the order picker receiver (5.1) and/or the courier receiver (6.1) can be implemented by a LAN receiver, a WiFi receiver, a Bluetooth receiver, an IR-receiver, a 3G or 4G receiver, a WiMAX receiver or by another commercially available receiver using at least one data reception technique known or developed in the art.

In the present invention, the user memory device (1.2), the main memory device (2.2), the local memory device (3.2), the supplier memory device (4.2), the order picker memory device (5.2) and/or the courier memory device (6.2) can be implemented by at least one HDD, RAID, SSD, a magnetic disk, an optical disk or at least one memory card, such as an SD card, an MMC card, a SmartMedia card, a flash memory card, a Compact Flash card, a PC card type I, II and III or CardBus card, a miniature card, an xD Picture card, a MirrorBit flash memory card and other types of memory cards known or developed in the art.

In the present invention, the user processing device (1.3), the main processing device (2.3), the local processing device (3.3), the supplier processing device (4.3), the order picker processing device (5.3) and/or the courier processing device (6.3) can be implemented by a central processing unit (CPU) comprising at least one processor core, at least one general purpose processor, at least one microcontroller, a specialized integrated circuit or another commercially available computing circuit.

In the present invention, the user display device (1.4), the main display device (2.4), the local display device (3.4), the supplier display device (4.4), the order picker display device (5.4) and/or the courier display device (6.4) can be implemented by an LCD display, a TFT display, an LED display, an ELD display, an HPA display, a TFT display, an OLED display, an SED display, a PDP display, an IMOD display, a laser display or another display manufactured using other display technology, including 3D display technology, known or developed in the art.

In the present invention, the user input means (1.5), the main input means (2.5), the local input means (3.5), the supplier input means (4.5), the order picker input means (5.5) and/or the courier input means (6.5) can be implemented by a keyboard, a mouse, at least one button and by other commercially available conventional input means.

In the present invention, the user transmitter (1.6), the main transmitter (2.6), the local transmitter (3.6), the supplier transmitter (4.6), the order picker transmitter (5.6) and/or the courier transmitter (6.6) can be implemented by a LAN transmitter, a WiFi transmitter, a Bluetooth transmitter, an IR-transmitter, a 3G or 4G transmitter, a WiMAX transmitter or by another commercially available transmitter using at least one data transmission technique known or developed in the art.

### METHOD FOR ORDERING GOODS

In the present invention, the process of ordering goods can be carried out using the method for ordering goods used by the system for ordering goods described above, wherein the method comprises the following steps: (a) recording supplier product data into the supplier memory device of at least one supplier server, (d) transmitting the recorded supplier product data to at least one local server comprising a local processing device, (e) converting, by means of the local processing device, the transmitted supplier data to a unified data format and generating unified product data based on the transmitted supplier product data, (f) transmitting the generated unified product data to at least one main server comprising a main processing device, (g) generating consolidated product data by means of the main processing device based on the transmitted unified product data, (h) transmitting the generated consolidated product data to at least one user device comprising a user processing device, (i) generating, by means of the user processing device, user order data based on the transmitted consolidated product data, (j) transmitting the generated user order data to the at least one main server, (k) generating, by means of the main processing device, main order data based on the transmitted user order data, (I) transmitting the generated main order data to the at least one local server, (m) generating, by means of the local processing device, first control instructions based on the transmitted main order data.

In another embodiment of the present invention, the method of ordering goods can further comprise transmitting the generated first control instructions to at least one order picker device.

In yet another embodiment of the present invention, the method of ordering goods can further comprise reading barcodes on the products by means of a barcode reader of at least one order picker device, transmitting the read barcode data to at least one local server, updating unified product data based on the transmitted barcode data, and generating second control instructions by means of the local processing device.

In other embodiments of the present invention, the method of ordering goods can further comprise transmitting the generated second control instructions to at least one courier device.

In another embodiment of the present invention, the method of ordering goods can further comprise generating, by means of a courier locator of at least one courier device, the courier device location data and transmitting the generated courier device location data to at least one local server.

According to some embodiments of the present invention, the method of ordering goods can further comprise analyzing, by means of an analytical unit of at least one local server, the unified product data and generating a report based on the results of the analysis.

According to an embodiment of the present invention, the method of ordering goods can further comprise transmitting the generated report to at least one administrator device and displaying, by means of a display device of the at least one administrator device, at least a portion of the transmitted report.

## Claims

1. A system for ordering goods, the system comprising:
at least one supplier server comprising:
a supplier memory device capable of storing supplier product data,
at least one main server comprising:
a main processing device,
at least one user device comprising:
a user processing device,
**characterized in that** the system further comprises
at least one local server capable of communicating with at least one of the at least one supplier server to receive the corresponding stored supplier product data and comprising:
a local processing device capable of converting the received supplier product data to a unified data format and generating unified product data,
wherein the at least one main server is capable of communicating with the at least one local server to receive the unified product data,
wherein the main processing device is capable of generating consolidated product data based on the received unified product data,
wherein the at least one user device is capable of communicating with the at least one main server to receive the consolidated product data, wherein the user processing device is capable of generating user order data based on the received consolidated product data,
wherein the at least one main server is further capable of communicating with the at least one user device to receive the user order data,
wherein the main processing device is further capable of generating main order data based on the received user order data,
wherein the at least one local server is further capable of communicating with the at least one main server to receive main order data,
and wherein the local processing device is further capable of generating first control instructions based on the received main order data.

2. The system according to claim 1, further comprising at least one order picker device capable of communicating with the at least one local server to receive the generated first control instructions.

3. The system according to claim 2, wherein the at least one order picker device comprises a barcode reader capable of reading barcodes on the products, wherein the at least one local server is further capable of communicating with the at least one order picker device to receive the read barcode data and of updating the unified product data based on the received barcode data and generating second control instructions.

4. The system according to claim 3, further comprising at least one courier device capable of communicating with the at least one local server to receive the generated second control instructions.

5. The system according to claim 4, wherein the at least one courier device comprises a courier locator capable of generating courier device location data, wherein the at least one local server is further capable of communicating with the at least one courier device to receive the generated courier device location data.

6. The system according to claim 5, wherein the at least one local server further comprises an analytical unit capable of analyzing the unified product data and generating a report based on the results of the analysis.

7. The system according to claim 6, further comprising at least one administrator device capable of communicating with the at least one local server to receive the generated report and comprising a display device for displaying at least a portion of the received report data.

8. A method of ordering goods, the method comprising:
recording supplier product data into the supplier memory device of at least one supplier server,
**characterized in that** the method further comprises
transmitting the recorded supplier product data to at least one local server comprising a local processing device, and
converting, by means of the local processing device, the transmitted supplier data to a unified data format and generating unified product data based on the transmitted supplier product data,
transmitting the generated unified product data to at least one main server comprising a main processing device,
generating consolidated product data by means of the main processing device based on the transmitted unified product data,
transmitting the generated consolidated product data to at least one user device comprising a user processing device,
generating, by means of the user processing device, user order data based on the transmitted consolidated product data,
transmitting the generated user order data to the at least one main server,
generating, by means of the main processing device, main order data based on the transmitted user order data,
transmitting the generated main order data to the at least one local server,
generating, by means of the local processing device, first control instructions based on the transmitted main order data.

9. The method according to claim 8, further comprising transmitting the generated first control instructions to at least one order picker device.

10. The method according to claim 9, further comprising reading barcodes on the products by means of a barcode reader of the at least one order picker device, transmitting the read barcode data to the at least one local server, updating unified product data based on the transmitted barcode data, and generating second control instructions by means of the local processing device.

11. The method according to claim 10, further comprising transmitting the generated second control instructions to at least one courier device.

12. The method according to claim 11, further comprising generating, by means of a courier locator of the at least one courier device, courier device location data and transmitting the generated courier device location data to the at least one local server.

13. The method according to claim 12, further comprising analyzing, by means of an analytical unit of the at least one local server, the unified product data and generating a report based on the results of the analysis.

14. The method according to claim 13, further comprising transmitting the generated report to at least one administrator device and displaying, by means of a display device of the at least one administrator device, at least a portion of the transmitted report.
